# FASCICULE DE BREVET EUROPEEN

(11) **EP 3 057 766 B1**
(45) Date de publication et mention de la délivrance du brevet: **13.01.2021**
(21) Numéro de dépôt: 14800112.6
(22) Date de dépôt: 16.10.2014
(51) Int. Cl.: B29C 49/20, B60K 15/03

(54) **PIED POUR UN ACCESSOIRE ET ACCESSOIRE DE RÉSERVOIR, PROCÉDÉ DE FABRICATION D'UN RÉSERVOIR**
BASIS FÜR EIN ZUBEHÖRTEIL UND TANKZUBEHÖRTEIL SOWIE VERFAHREN ZUM HERSTELLEN EINES TANKS
BASE FOR AN ACCESSORY AND TANK ACCESSORY, METHOD FOR PRODUCING A TANK

(30) Priorité: 16.10.2013 FR 1360086; 30.12.2013 FR 1363703
(43) Date de publication de la demande: 24.08.2016
(73) Titulaire: Plastic Omnium Advanced Innovation and Research, 1130 Bruxelles (BE)
(72) Inventeur: COING, Jean-François, F-60280 Clairoix (FR); TRYÖEN, Arnaud, F-60280 Margny-les-compiegne (FR); JOUIE, Sébastien, 60280 Margny Les Compiègne (FR); GUEZENNEC, Yvonnig, F-60280 Venette (FR); SEHIER, Odile, F-60700 Fleurines (FR)
(74) Mandataire: Remy, Vincent Noel Paul
(86) Numéro de dépôt international: PCT/FR2014/052641
(87) Numéro de publication internationale: WO 2015/055961

(56) Documents cités:
- EP-A1- 1 864 782
- WO-A1-2010/015615
- DE-A1-102010 032 278
- US-A1- 2008 006 625
- US-A1- 2009 139 994

## Description

### Domaine technique auquel se rapporte l'invention

L'invention se rapporte au domaine de la fabrication par soufflage de réservoirs en matière plastique pour véhicules automobiles. Il peut s'agir de réservoirs à carburant ou de réservoir pour d'autres fluides, notamment pour de l'urée, dans un système de dépollution catalytique des gaz d'échappement.

### État de la technique antérieure

Du document WO2010/015670, on connaît déjà un pied de fixation d'accessoire interne de réservoir. Ce pied comprend une surface d'arrêt et une double lèvre qui vient se souder à une préforme encore à l'état fondu pendant le soufflage de cette dernière, au cours de la fabrication d'un réservoir par le procédé décrit dans la demande EP 1 110 697 au nom de la demanderesse.

Sur une préforme monocouche, ce procédé donne entière satisfaction.

Sur une préforme multicouche, qui contient notamment une couche formant barrière aux hydrocarbures ou autres produits particulièrement volatiles (généralement en EVOH), la pénétration de la double lèvre dans l'épaisseur de la préforme, lors de la soudure, peut engendrer une déformation de la préforme susceptible d'étirer la couche barrière de façon localement excessive. La couche barrière risque alors de devenir trop fine. Il faut donc doser la pression sur le pied pendant la soudure pour limiter la profondeur d'enfoncement de la lèvre et éviter de trop réduire l'épaisseur de la couche barrière. À l'inverse, si on réduit trop la pression, on ne peut plus assurer une soudure de bonne qualité du pied dans la préforme.

Le document US 2009/139994 A1 divulgue un pied en matière plastique pour un accessoire de réservoir pour véhicule automobile, comprenant des saillies destinées à être soudées à une préforme lors de la fabrication du réservoir par soufflage de cette préforme.

Du document WO 2010/015615 A1, on connaît déjà un pied en matière plastique pour un accessoire de réservoir pour véhicule automobile, comprenant des saillies destinées à être soudées à une préforme lors de la fabrication du réservoir par soufflage de cette préforme.

La solution actuelle exige donc une grande précision, ce qui nécessite du matériel couteux et fragile.

### Exposé de l'invention

L'invention a pour but de remédier à cet inconvénient en fournissant une solution dans laquelle on limite la pénétration sans avoir besoin de maîtriser très précisément la pression exercée sur le pied.

Selon l'invention, on prévoit un pied conformément à la revendication 1.

Le pied de fixation selon l'invention résout les problèmes mentionnés plus haut de sécurisation de la soudure sans risque de dégradation de la couche barrière de la préforme.

Dans un mode de réalisation particulier, les saillies sont des nervures, c'est-à-dire des saillies s'étendant longitudinalement.

Dans un mode de réalisation particulier, les nervures sont périphériques à la surface pleine.

Dans un mode de réalisation particulier, les nervures forment des boucles fermées.

Dans un mode de réalisation particulier, la surface pleine a un contour circulaire.

Dans un mode de réalisation particulier, l'un au moins des ajours est bordé par une saillie.

Dans un mode de réalisation particulier, la saillie bordant l'ajour s'étend longitudinalement sur toute la périphérie de l'ajour.

Dans un mode de réalisation particulier, la hauteur des saillies par rapport à la surface pleine est de 0,7 mm.

Dans un mode de réalisation particulier, la largeur au sommet des saillies est de 0,5 mm.

Dans un mode de réalisation particulier, la portion périphérique forme, en section transversale, un angle de 14° avec la portion centrale.

Dans un mode de réalisation particulier, la portion tronconique a une épaisseur de 0,7 mm.

Bien que le pied selon l'invention convienne particulièrement bien pour réaliser simultanément le soufflage d'une préforme et la soudure du pied à ladite préforme pendant ce soufflage, ses caractéristiques permettent également de le souder à la paroi du réservoir postérieurement au soufflage de la préforme. En particulier, on peut souder le pied à la surface extérieure de la paroi d'un réservoir soufflé, pour y fixer un accessoire externe.

L'invention a également pour objet un connecteur pour accessoire interne de réservoir ayant un pied tel que décrit ci-dessus et des moyens de connexion à un accessoire.

L'invention a également pour objet un connecteur pour accessoire externe de réservoir ayant un pied tel que décrit ci-dessus et des moyens de connexion à un accessoire.

L'invention a également pour objet un accessoire de réservoir ayant un pied tel que décrit ci-dessus.

L'invention trouve une application particulièrement avantageuse lorsqu'il s'agit de fixer d'un côté de la préforme un premier accessoire qui présente une ouverture sur sa face destinée à être fixée à la préforme. Cette ouverture peut être destinée à communiquer avec un second accessoire ultérieurement placé de l'autre côté de la préforme. Le premier accessoire n'est pas nécessairement situé du côté intérieur du réservoir. Toutefois, si la fabrication du réservoir consiste à souffler une préforme dans un moule à deux empreintes avec un noyau interposé entre les empreintes et si le premier accessoire se trouve à l'intérieur du réservoir, il peut avantageusement être porté par le noyau pendant le soufflage de la préforme.

A cet effet, un mode de réalisation particulier d'un accessoire selon l'invention permet de souder ce premier accessoire à la préforme par une soudure étanche. Selon ce mode de réalisation particulier :
- l'accessoire possède un pied tel que décrit ci-dessus,
- le pied de l'accessoire présente une ouverture qui est entourée de la surface du pied désignée surface pleine en retrait des saillies.

On peut faire communiquer un tel premier accessoire avec un accessoire placé de l'autre côté de la préforme. La liaison entre les deux accessoires peut être rendue étanche par connexion directe entre ceux-ci ou par liaison étanche entre d'une part, le premier accessoire et la préforme, grâce à l'invention, d'autre part, le second accessoire et la préforme. Mais dans tous les cas, la liaison entre le premier accessoire et la préforme est étanche, afin que le volume entourant le premier accessoire ne communique pas avec l'autre côté de la préforme. La propriété d'étanchéité de la soudure résulte des caractéristiques du pied, grâce à la qualité de la soudure que ce pied permet d'atteindre.

Une application particulière consiste en un accessoire appartenant à un circuit de ventilation d'un réservoir à carburant, pour l'évacuation des vapeurs de carburant. Cet accessoire, qui peut inclure un séparateur liquide / vapeur, muni ou non d'un dispositif actif de vidange, comporte une ouverture sur une de ses faces et au moins un raccord pour le branchement d'un tuyau de ventilation. Conformément à l'invention, l'ouverture est entourée d'un bord qui répond aux caractéristiques susmentionnées.

Une autre application particulière consiste en un accessoire ouvert dont l'ouverture est destinée à être obturée. L'obturation de l'ouverture est effectuée par la préforme. Là encore, l'accessoire présente les caractéristiques susmentionnées, à savoir :
- l'accessoire possède un pied tel que décrit ci-dessus,
- le pied de l'accessoire présente une ouverture qui est entourée de la surface du pied désignée surface pleine en retrait des saillies.

Un tel accessoire est incomplet tant qu'il n'a pas été soudé à la préforme, laquelle vient le compléter en obturant son ouverture.

Par exemple, l'accessoire peut comporter une chambre qui a besoin d'être fermée lors du fonctionnement de l'accessoire. Cette chambre est délimitée par un fond et par une paroi latérale aboutissant au pied. Elle est ouverte à l'opposé du fond, par une ouverture entourée de la surface du pied désignée surface pleine en retrait des saillies. Cette ouverture se trouve obturée par la préforme après soudure du pied de l'accessoire à la préforme.

Un autre mode de réalisation de l'invention permet de souder le premier accessoire à la préforme par une soudure non étanche, puis à serrer le premier accessoire contre la préforme à l'aide d'un moyen de serrage rapporté, pour rendre étanche la liaison entre le premier accessoire et la préforme. Ce mode de réalisation est plus particulièrement indiqué lorsque le premier accessoire est destiné à communiquer avec un second accessoire situé de l'autre côté de la préforme.

L'invention a aussi pour objet un réservoir pour véhicule automobile, comprenant au moins un accessoire tel que décrit ci-dessus, dont le pied est soudé à ladite paroi du réservoir.

Dans un mode de réalisation particulier, l'accessoire présente une ouverture entourée du pied soudé à ladite paroi du réservoir.

L'invention a également pour objet un procédé de fixation d'un pied pour un accessoire interne de réservoir pour véhicule automobile, conformément à la revendication 11, tel que décrit ci-dessus, consistant à
- monter le pied sur un noyau placé entre au moins deux empreintes d'un moule de soufflage du réservoir,
- interposer une préforme, divisée en autant de parties que d'empreintes et se trouvant dans un état fondu, entre le noyau et chaque empreinte,
- fermer les empreintes sur le noyau,
- injecter un gaz de soufflage entre le noyau et chaque empreinte, pour appliquer chaque partie de la préforme contre l'empreinte correspondante,
- appliquer le pied contre la préforme en la pressant contre l'empreinte correspondante, de manière à transférer une partie de la chaleur de la préforme aux saillies du pied, de manière à les souder à la préforme,
- ouvrir les empreintes de manière à libérer le noyau,
- retirer le noyau,
- fermer les empreintes sur elles-mêmes,
- souder ensemble les parties de la préforme pour constituer une coque de réservoir,
- ouvrir les empreintes,
- démouler la coque de réservoir.

L'invention a également pour objet un procédé de fixation d'un pied pour un accessoire externe de réservoir pour véhicule automobile, conformément à la revendication 12, tel que décrit ci-dessus, consistant à
- monter le pied sur une empreinte d'un moule de soufflage du réservoir, comprenant un noyau placé entre au moins deux empreintes,
- interposer une préforme, divisée en autant de parties que d'empreintes et se trouvant dans un état fondu, entre le noyau et chaque empreinte,
- fermer les empreintes sur le noyau,
- injecter un gaz de soufflage entre le noyau et chaque empreinte, pour appliquer chaque partie de la préforme contre l'empreinte correspondante,
- appliquer le pied contre la préforme en la pressant contre un appui prévu à cet effet sur le noyau, de manière à transférer une partie de la chaleur de la préforme aux saillies du pied, de manière à les souder à la préforme,
- ouvrir les empreintes de manière à libérer le noyau,
- retirer le noyau,
- fermer les empreintes sur elles-mêmes,
- souder ensemble les parties de la préforme pour constituer une coque de réservoir,
- ouvrir les empreintes,
- démouler la coque de réservoir.

Dans un mode de mise en œuvre particulier, la mise du pied contre la préforme s'effectue dans des conditions telles que chaque saillie se soude à la préforme sur une hauteur de 0,4 mm.

### Brève description des dessins

L'invention sera mieux comprise à la lecture des figures annexées, qui sont fournies à titre d'exemples et ne présentent aucun caractère limitatif, dans lesquelles :
La figure 1 est une vue tridimensionnelle d'un pied de fixation selon un premier mode de réalisation de l'invention.
La figure 1A est une vue en coupe selon I - I de la figure 1.
La figure 2 est une vue analogue à celle de la figure 1 d'un pied de fixation selon un deuxième mode de réalisation de l'invention.
La figure 3 est une vue analogue à celles des figures 1 et 2 d'un pied de fixation selon un troisième mode de réalisation, vu sous un angle différent.
La figure 4 représente, en vue de dessus, un pied de fixation selon un quatrième mode de réalisation.
La figure 5 représente, en vue de dessous, le pied de fixation de la figure 4.
La figure 6 est une section selon le plan VI - VI de la figure 1.
La figure 7 est une section selon le plan VII - VII, positionné sur la figure 4, du pied de fixation de la figure 4 assemblé à une paroi d'un réservoir.
La figure 8 est une section transversale d'un réservoir muni de trois pieds de fixation selon l'invention.
La figure 9 est une vue en perspective d'un accessoire muni d'un pied prévu pour être soudé de manière étanche à une préforme.
La figure 10 est une vue en coupe selon X-X de l'accessoire de la figure 9.
La figure 11 est une vue du détail XI de la figure10.
La figure 12 est une vue analogue à la figure 9 d'une variante d'un accessoire du même type.
La figure 13 est une vue en coupe d'un accessoire en forme de cloche devant former un volume fermé avec la préforme.

### Description détaillée des modes de réalisation

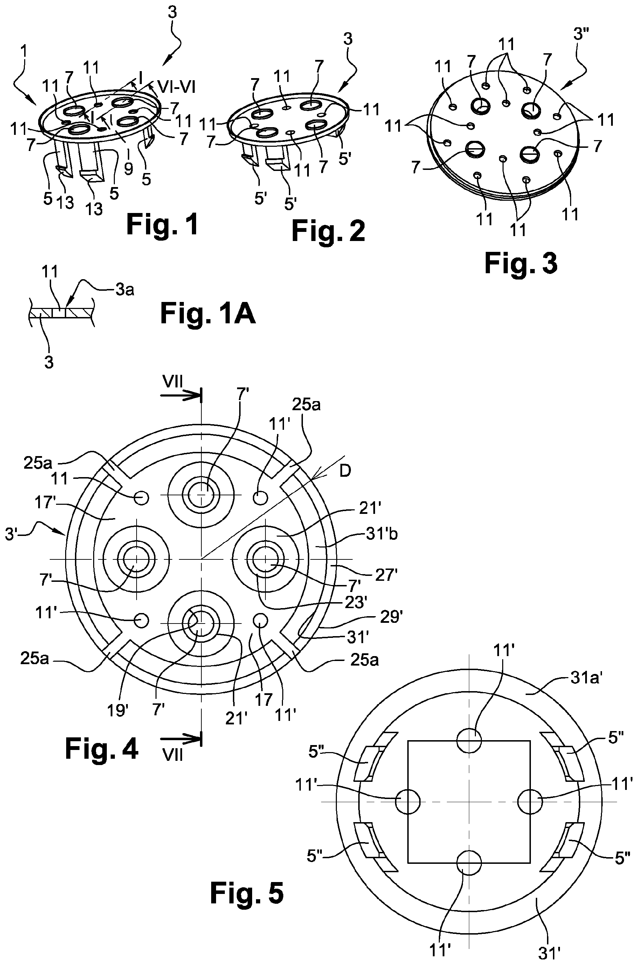

Le pied de fixation 1 de la figure 1 comprend une embase 3 globalement en forme de disque et quatre pattes d'encliquetage 5 s'étendant perpendiculairement à l'embase 3.

Un tel pied de fixation est destiné à être soudé à la paroi d'un réservoir fabriqué par soufflage d'une paraison en matière plastique. La paraison constitue une préforme au sens de l'invention. L'embase 3 se soude, par sa face opposée aux pattes d'encliquetage, à la paroi encore chaude de la paraison pendant la mise en forme de cette dernière dans un moule de soufflage.

La chaleur de la paraison est l'unique source de chaleur permettant la fusion de la matière plastique de l'embase, dans ses régions prévues pour se souder à la paraison. Ces régions sont décrites ultérieurement.

Le pied de fixation est utilisé pour la fixation d'un organe presque toujours à l'intérieur du réservoir. L'embase 3 est donc soudée contre la face interne de la paraison. Cependant, il n'est pas exclu que le pied de fixation de l'invention soit utilisé pour fixer un organe à l'extérieur du réservoir, auquel cas l'embase 3 est soudée contre la face externe de la paraison.

Pendant l'opération de soudage proprement dite, le pied de fixation est maintenu en position par un préhenseur qui peut être soit porté par un noyau présent à l'intérieur du moule, pendant la mise en place de la paraison, soit porté par l'empreinte du moule, si le pied de fixation doit être solidarisé à la face externe du réservoir.

Dans le mode de réalisation de la figure 1, l'embase 3 a la forme d'un disque plan, dont le diamètre est de 38,5 mm. Elle comporte une surface pleine à contour circulaire pourvue de quatre ajours 7 qui sont des trous circulaires traversants débouchant sur chacune des deux faces de l'embase 3. La surface pleine de l'embase entoure chacun des ajours 7.

Chaque ajour présente un diamètre de 5 mm.

Les ajours 7 sont répartis symétriquement autour du centre 9 de l'embase 3, ce qui permet, dans une certaine mesure, de préserver le caractère isotrope du pied de fixation, dans le sens où sa solidarisation avec la paroi du réservoir résiste à des sollicitations mécaniques transversales (rotation, arrachement, cisaillement) dirigées dans toutes les directions.

Une autre disposition des ajours ainsi qu'un nombre différent d'ajours sont bien entendu possibles selon l'invention.

L'embase 3 comporte également quatre évents 11 disposés entre les ajours 7. Les évents 11 sont aussi des trous traversants qui débouchent sur chacune des deux faces de l'embase 3. Leur diamètre est de 2 mm.

Les pattes d'encliquetage 5 se présentent sous la forme de languettes rigides rectilignes à section rectangulaire, terminées, à leur extrémité opposée à l'embase 3, par une forme en crochet 13 comprenant une rampe inclinée et un épaulement sur leur côté opposé aux autres pattes d'encliquetage.

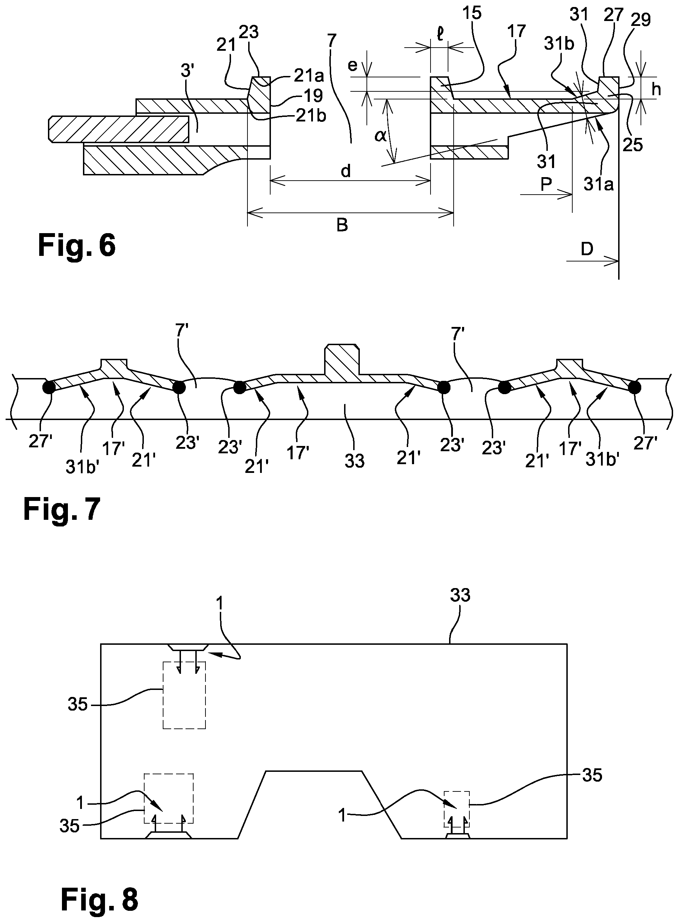

On décrira la forme des bords périphériques de l'embase 3 et de chacun des ajours 7 en référence à la figure 6.

Les évents 11 sont délimités simplement par l'arête de l'embase plane 3, sans aucun relief, comme on le voit sur la figure 1A.

Le mode de réalisation de la figure 2 se distingue du précédent par la longueur des pattes d'encliquetage 5', qui sont plus courtes. L'embase 3, les ajours 7 et les évents 11 sont identiques à ceux du mode de réalisation de la figure 1.

Dans le mode de réalisation de la figure 3, la surface pleine de l'embase 3" comporte aussi quatre ajours 7, mais elle comporte douze évents 11, répartis de façon régulière entre les ajours 7, afin de préserver la symétrie du pied de fixation et maintenir autant que possible son caractère isotrope.

On va maintenant détailler la forme des bords des ajours 7 et des embases 3 et 3".

Les bords des ajours 7 et les bords des embases 3 et 3" sont identiques dans les trois modes de réalisation des figures 1 à 3. Leurs formes et dimensions sont différentes dans le quatrième mode de réalisation de la figure 4.

Comme on le voit bien sur la figure 6, qui est une section selon VI - VI de la figure 1, le bord de l'ajour 7 est formé par une saillie 15 en forme de nervure périphérique continue, qui forme une boucle fermée s'étendant longitudinalement sur toute la périphérie de l'ajour. Cette saillie 15 s'élève d'une hauteur h = 0,7 mm (+/- 0,1 mm) au-dessus de la face plane 17 de la surface pleine de l'embase. Elle est formée, en section, par un trapèze dont le côté 19 proche de l'ajour 7 est perpendiculaire à la face plane 17 de l'embase et dont le côté opposé 21 éloigné de l'ajour est incliné en direction de l'ajour, de sorte que la saillie 15 possède une face externe tronconique correspondant au côté 21 et une face interne cylindrique correspondant au côté 19.

La saillie 15 possède aussi une face supérieure plane et annulaire 23 reliant sa face tronconique 21 à sa face cylindrique 19. Cette face annulaire plane 23 constitue une première zone de soudure du pied de fixation 3 à la paraison lors du soufflage de cette dernière. La largeur l de la face annulaire, également désignée largeur au sommet de la nervure, est de 0,5 mm (+/- 0,05 mm) et son diamètre intérieur d est de 5 mm, ce qui confère à la face annulaire 23 une superficie de 15,7 mm².

Sur la hauteur h de la saillie 15, l'écart de rayon entre le haut 21a et le bas 21b de la face tronconique 21 est de 0,07 mm.

Ces dimensions de la saillie 15 sont déterminées pour que, compte tenu de la composition, de la température et de l'épaisseur de la paraison et de la force avec laquelle le pied de fixation 1 est appliqué par son embase 3 contre ladite paraison pendant son soufflage, la saillie 15 fonde sur une épaisseur maximale e de 0,4 mm pour se souder à la paraison.

Ces dimensions particulières sont fournies à titre indicatif et ne constituent pas l'unique mode de réalisation possible de l'invention. Toutefois, elles fournissent le meilleur résultat entre différents impératifs antagonistes :
- assurer la bonne tenue mécanique du pied de fixation sur la paroi du réservoir pendant toute la vie du véhicule, nonobstant les chocs et vibrations endurés,
- limiter la quantité de matière à faire fondre sur le pied de fixation pour que l'opération de soudure puisse avoir lieu uniquement à partir de la chaleur de la paraison, c'est-à-dire sans apport de chauffage,
- éviter de pénétrer trop profondément dans l'épaisseur de la paraison pour ne pas endommager les couches barrières qui garantissent l'emprisonnement du produit (liquide et/ou gazeux) contenu dans le réservoir

La saillie 15 est la même autour de chacun des ajours 7 des embases 3 et 3". Ainsi, le pied de fixation 1 se soude à la paraison par au moins les quatre zones de soudure que constituent les quatre surfaces planes annulaires 23 des quatre ajours 7.

En outre, le pied de fixation se soude à la paraison par une saillie 25 située à la périphérie de l'embase 3 et s'étendant en nervure continue tout autour de ladite embase 3. Dans une variante, la nervure s'interrompt par endroits, par exemple en quatre emplacements régulièrement répartis 25a, comme illustré par le mode de réalisation de la figure 4.

Cette saillie 25 possède elle aussi une face de soudure annulaire et plate 27, située entre une face latérale externe 29 cylindrique et une face tronconique interne 31. Certaines des dimensions déjà indiquées pour la saillie 15 demeurent valables : élévation de la saillie 25 à la hauteur h, largeur l de la face annulaire plane 27.

Au voisinage de la saillie 25, l'embase 3 possède un bord périphérique relevé 31, délimité par deux faces parallèles tronconiques 31a et 31b distantes de 0,7 mm (+/- 0,05 mm), dont la génératrice forme un angle a de 14° avec la face plane 17 de l'embase 3. Ainsi la surface pleine de l'embase possède une portion centrale et une portion périphérique 31b évasée en direction du sommet de la saillie 25, aboutissant à la base de ladite saillie 25. La portion centrale est circulaire et la portion périphérique évasée est tronconique. Ainsi la portion tronconique a une épaisseur de 0,7mm.

Ce bord périphérique relevé 31 remplit notamment la fonction de maintien de la saillie 25 au contact de la paraison pendant le refroidissement des matières et la prise de la soudure. En effet, le bord périphérique relevé 31 confère à l'embase une certaine résistance au cintrage, résistance qui entre en jeu pendant l'application du pied de fixation contre la paraison, car la paraison peut se laisser davantage pénétrer au droit des saillies 15 bordant les ajours 7 qu'au droit de la saillie 25. Dans ce cas, un cintrage ou incurvation de l'embase 3 risque de se produire, au détriment d'une bonne application de la saillie 27 contre la paraison et donc au risque d'une soudure moins profonde de la saillie 27 avec la paraison.

Là encore, les dimensions indiquées pour la saillie 27 et le bord périphérique relevé 31 sont indicatives, mais peuvent être considérées comme un optimum tenant compte des différentes contraintes antagonistes de l'application.

Ainsi, en dehors des zones de soudure constituées par les saillies 15 et 25, le pied comprend une surface pleine en retrait des saillies, cette surface pleine possédant une partie dépourvue de saillies (la face plane 17 et la face tronconique 31b) et une partie occupée par les saillies 15 et 25.

Par un calcul simple, on trouve que l'aire de la partie de la surface pleine dépourvue de saillies est égale à quatre fois l'aire de la surface pleine occupée par les saillies.

En effet, les embases 3 et 3" ont un diamètre externe D = 38,5 mm, la partie plane 17 a un diamètre P = 32,1 mm, la base 21b externe de chaque saillie 15 a un diamètre B = 6,4 mm.

Dans le quatrième mode de réalisation, illustré par les figures 4, 5 et 7, on retrouve les ajours 7', qui sont aussi au nombre de quatre, les évents 11', également au nombre de quatre, et les surface planes annulaires de soudure 23' et 27' en périphérie respectivement des ajours 7' et de l'embase 3'.

Contrairement aux modes de réalisation précédents, les saillies 15' et 25' n'ont pas de face latérale tronconique, mais uniquement des faces latérales cylindriques 19' et 21', respectivement 31' et 29'. C'est pourquoi ces faces se réduisent à des cercles sur la vue de dessus de la figure 4.

Sur la vue de dessus de la figure 5, on retrouve les quatre évents 11', les pattes d'encliquetage 5"et le bord périphérique relevé 31a'.

L'aire de la partie de la surface pleine dépourvue de saillies est égale à deux fois et demie l'aire de la surface pleine occupée par les saillies.

Grâce à ce ratio, la partie pleine 17' de l'embase sert de surface d'arrêt limitant la pénétration des saillies 15' et 25' dans l'épaisseur de la paraison, ce qui protège notamment ses couches barrière d'un trop grand étirement lors de l'enfoncement des saillies de l'embase dans la paraison.

Ce résultat est illustré par la figure 7, qui montre le pied de fixation des figures 4 et 5 une fois soudé à la paraison et se retrouvant solidarisé à la paroi intérieure d'un réservoir 33.

On voit nettement sur cette figure le rôle de limiteur d'enfoncement joué par la paroi plane 17' lorsqu'elle rencontre la matière de la paraison encore en fusion.

Sur la figure 8, on a illustré différents emplacements d'un pied de fixation selon l'invention.

Ce pied sert essentiellement à l'intérieur de réservoir, pour y fixer des accessoires 35 bien connus de l'homme du métier, en différents emplacements, dont trois ont été représentés sur le dessin.

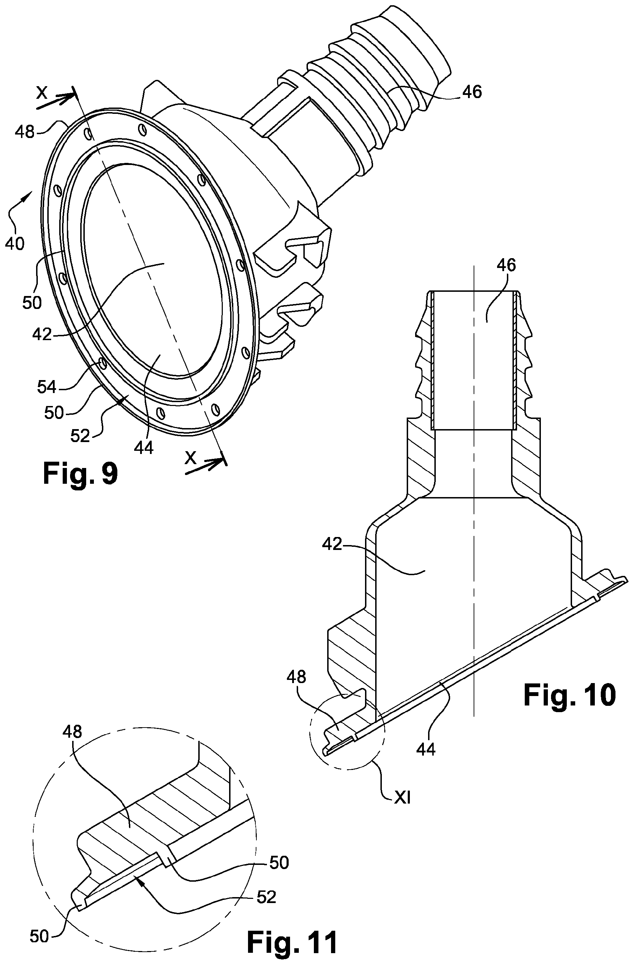

Sur la figure 9, on a représenté un accessoire externe 40 qui a pour fonction de raccorder une tubulure (non représentée) branchée extérieurement à un réservoir (non représenté).

L'accessoire 40 comporte une chambre 42 qui débouche d'une part sur l'extérieur de l'accessoire, par une ouverture 44, d'autre part sur un raccord de tubulure 46.

La forme précise de l'accessoire 40 ne sera pas détaillée ici car elle n'illustre pas les caractéristiques essentielles de l'invention. L'aspect important de l'accessoire 40 est qu'il possède un pied pour sa soudure à une paraison multicouche lors de la mise en forme de cette dernière par moulage par soufflage. Ce pied est constitué par une collerette 48 entourant l'ouverture 44.

Conformément à l'invention, la collerette 48 comprend des saillies 50 sous forme de nervures annulaires destinées à être soudées à la paraison lors de la fabrication du réservoir par soufflage de cette paraison, avec une surface pleine 52 en retrait des saillies 50, cette surface pleine 52 possédant une partie dépourvue de saillies et une partie occupée par les saillies, l'aire de la partie de la surface pleine dépourvue de saillies étant au moins égale à une fois l'aire de la surface pleine occupée par les saillies.

En outre, la surface pleine 52 comporte des évents 54 pour l'évacuation d'air entre ladite surface et la paraison pendant la soudure.

Grâce à ces caractéristiques, l'accessoire 40 peut être soudé de manière étanche à la paraison, sans pénétrer trop profondément dans l'épaisseur de la paraison et donc sans dégrader la couche étanche de la paraison.

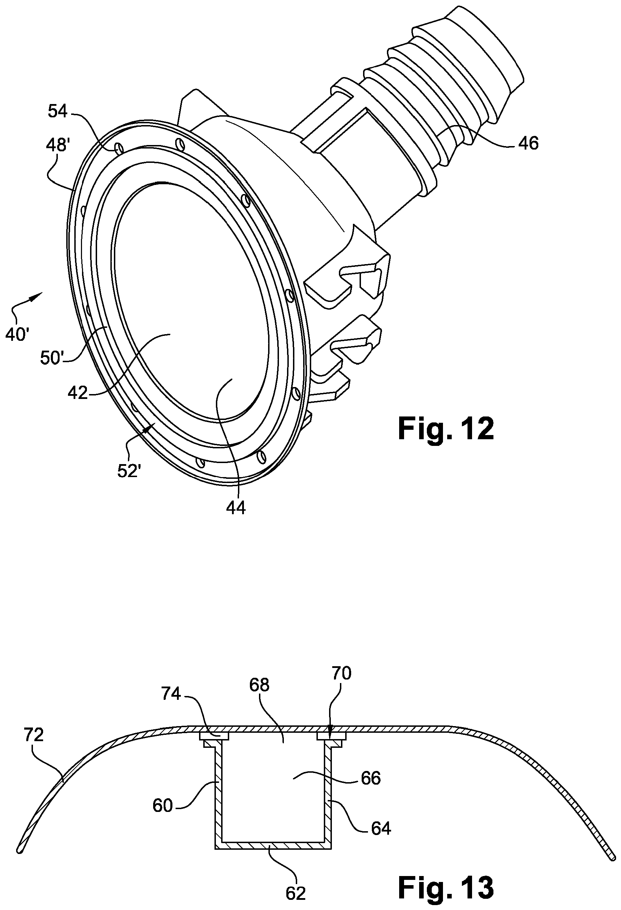

Dans la variante illustrée par la figure 13, les éléments portant les mêmes numéros de référence sont identiques à ceux décrits en référence aux figures précédentes.

L'accessoire 40' possède une collerette 48' constituant un pied comportant une surface pleine 52', de laquelle dépasse une saillie 50' sous forme de nervure annulaire. Des évents 54 sont ménagés dans la surface pleine 52'.

Comme l'accessoire 40, l'accessoire 40' peut être soudé à une paraison pendant son soufflage.

Un intérêt de l'accessoire 40, 40' est qu'il peut être solidarisé au réservoir dès le soufflage de ce dernier, sans opération de reprise ni intervention à l'intérieur du réservoir. Il est donc possible de munir un réservoir d'un tel accessoire y compris dans des régions intérieures dudit réservoir qui sont inaccessibles après fabrication du réservoir.

Sur la figure 13, on a représenté un autre mode de réalisation d'un accessoire 60 selon l'invention. Cet accessoire 60 a globalement une forme en cloche, c'est pourquoi il est schématisé sur la figure avec une section en U.

L'accessoire 60 possède un fond 62 et une paroi latérale 64 qui délimitent une chambre intérieure 66 ouverte vers le haut (dans le sens de la figure 13). Ainsi, la chambre intérieure 66 est ouverte à l'opposé du fond 62, par une ouverture 68 qui est entourée d'un pied 70 en forme de collerette.

Comme le pied 48, 48' des deux modes de réalisation précédents, le pied 70 comporte une ou plusieurs rainures annulaires formant des saillies dépassant d'une surface pleine qui se trouve en retrait des saillies. Sur la figure 13, les saillies ne sont pas réprésentées, car le pied 70 a été soudé à la paroi 72 d'un réservoir, lors du soufflage d'une paraison, et la soudure est schématisée par un trait fort 74. Une fois la soudure réalisée, la chambre 66 est fermée de manière étanche par la paroi 72 du réservoir (au entrées et sorties fonctionnelles près) et elle le demeure pendant toute la vie du réservoir, c'est-à-dire lors du fonctionnement de l'accessoire. Ainsi, on évite d'avoir à prévoir une cloison sur l'accessoire du côté de la paroi du réservoir, tout en fournissant un moyen de fixer l'accessoire à la paroi 72 de manière fiable et non destructrice de la couche barrière de la paraison multicouche. Si l'accessoire est destiné à communiquer avec l'extérieur du réservoir, on peut aisément percer la paroi 72 dans sa région située en regard de l'ouverture 68 et réaliser la connexion entre l'accessoire 60 et un accessoire externe (non représenté), sans avoir à s'introduire dans le réservoir. La connexion entre les deux accessoires peut :
- soit exploiter l'étanchéité de la soudure 70, auquel cas il suffit que l'accessoire externe soit lui aussi soudé de manière étanche à la paroi 72,
- soit être une connexion par contact direct et étanche entre les deux accessoires.

Dans tous les cas, l'étanchéité de la soudure 70 permet d'empêcher les liquides et gaz contenus dans le réservoir de pénétrer dans la chambre 66.

L'invention n'est pas limitée aux modes de réalisation présentés et d'autres modes de réalisation apparaîtront clairement à l'homme du métier.

## Revendications

1. Pied (1) en matière plastique pour un accessoire (35) de réservoir (33) pour véhicule automobile, comprenant des saillies (15, 25) destinées à être soudées à une préforme lors de la fabrication du réservoir par soufflage de cette préforme,
- le pied comprenant une surface pleine en retrait des saillies, cette surface pleine possédant une partie dépourvue de saillies (17, 31b) et une partie occupée par les saillies, la partie dépourvue de saillies possédant une portion centrale plane circulaire (17),
- l'aire de la partie de la surface pleine dépourvue de saillies (17, 31b) étant au moins égale à une fois l'aire de la surface pleine occupée par les saillies (15, 25), **caractérisé en ce que :**
- la partie dépourvue de saillies possède également une portion périphérique tronconique (31b) évasée en direction des sommets de saillies (25), aboutissant à des bases des saillies (25),
- la surface pleine entoure des ajours (7) répartis symétriquement autour du centre de la surface pleine, l'un au moins des ajours (7) étant bordé par une autre saillie (15).

2. Pied selon la revendication 1, dans lequel l'aire de la partie de la surface pleine dépourvue de saillies (17, 31b) est au moins égale à deux fois l'aire de la surface pleine occupée par les saillies (15, 25).

3. Pied selon l'une des quelconques des revendications précédentes, dans lequel les saillies (15, 25) sont des nervures, c'est-à-dire des saillies s'étendant longitudinalement.

4. Pied selon l'une quelconque des revendications précédentes, dans lequel la surface pleine a un contour circulaire.

5. Pied selon l'une quelconque des revendications 3 et 4, dans lequel les nervures (25) sont périphériques à la surface pleine.

6. Pied selon la revendication précédente, dans lequel la portion périphérique (31b) forme, en section transversale, un angle de 14° avec la portion centrale (17).

7. Connecteur pour accessoire interne ou externe de réservoir ayant un pied (1) selon l'une quelconque des revendications précédentes et des moyens de connexion à un accessoire (35).

8. Accessoire (35) de réservoir, **caractérisé par le fait que** :
- l'accessoire possède un pied selon l'une quelconque des revendications 1 à 6;
- le pied de l'accessoire présente une ouverture qui est entourée de la surface du pied désignée surface pleine en retrait des saillies.

9. Accessoire (35) selon la revendication précédente, comportant une chambre devant être fermée lors du fonctionnement de l'accessoire, délimitée par un fond et par une paroi latérale aboutissant au pied (1), ladite chambre est ouverte à l'opposé du fond, par une ouverture entourée de la surface du pied désignée surface pleine en retrait des saillies.

10. Réservoir (33) pour véhicule automobile, comprenant au moins un accessoire (35) selon l'une quelconque des revendications 8 à 9, dont le pied (1) est soudé à ladite paroi du réservoir, le réservoir présentant en outre une ouverture entourée du pied soudé à ladite paroi du réservoir.

11. Procédé de fixation d'un pied (1) pour un accessoire (35) interne de réservoir (33) pour véhicule automobile, selon l'une quelconque des revendications 1 à 6, consistant à :
- monter le pied (1) sur un noyau placé entre au moins deux empreintes d'un moule de soufflage du réservoir,
- interposer une préforme, divisée en autant de parties que d'empreintes et se trouvant dans un état fondu, entre le noyau et chaque empreinte,
- fermer les empreintes sur le noyau,
- injecter un gaz de soufflage entre le noyau et chaque empreinte, pour appliquer chaque partie de la préforme contre l'empreinte correspondante,
- appliquer le pied (1) contre la préforme en la pressant contre l'empreinte correspondante, de manière à transférer une partie de la chaleur de la préforme aux saillies (15, 25) du pied, de manière à les souder à la préforme,
- ouvrir les empreintes de manière à libérer le noyau,
- retirer le noyau,
- fermer les empreintes sur elles-mêmes,
- souder ensemble les parties de la préforme pour constituer une coque de réservoir,
- ouvrir les empreintes,
- démouler la coque de réservoir.

12. Procédé de fixation d'un pied pour un accessoire externe de réservoir pour véhicule automobile, selon l'une quelconque des revendications 1 à 6, consistant à :
- monter le pied sur une empreinte d'un moule de soufflage du réservoir, comprenant un noyau placé entre au moins deux empreintes,
- interposer une préforme, divisée en autant de parties que d'empreintes et se trouvant dans un état fondu, entre le noyau et chaque empreinte,
- fermer les empreintes sur le noyau,
- injecter un gaz de soufflage entre le noyau et chaque empreinte, pour appliquer chaque partie de la préforme contre l'empreinte correspondante,
- appliquer le pied contre la préforme en la pressant contre un appui prévu à cet effet sur le noyau, de manière à transférer une partie de la chaleur de la préforme aux saillies du pied, de manière à les souder à la préforme,
- ouvrir les empreintes de manière à libérer le noyau,
- retirer le noyau,
- fermer les empreintes sur elles-mêmes,
- souder ensemble les parties de la préforme pour constituer une coque de réservoir,
- ouvrir les empreintes,
- démouler la coque de réservoir.

## Patentansprüche

1. Basis (1) aus Kunststoff für ein Zubehörteil (35) für Tank (33) für Kraftfahrzeug, umfassend Vorsprünge (15, 25), die dazu bestimmt sind, bei der Herstellung des Tanks durch Formblasen eines Vorformlings an diesem Vorformling verschweißt zu werden,
- wobei die Basis eine von den Vorsprüngen zurückgesetzte, voll ausgefüllte Fläche umfasst, wobei diese voll ausgefüllte Fläche einen Teil ohne Vorsprünge (17, 31b) und einen von den Vorsprüngen eingenommenen Teil besitzt, wobei der Teil ohne Vorsprünge einen kreisförmigen flächigen mittigen Abschnitt (17) besitzt,
- wobei die Fläche des Teils der voll ausgefüllten Fläche ohne Vorsprünge (17, 31b) wenigstens gleich dem Einfachen der von den Vorsprüngen (15, 25) eingenommenen Fläche der voll ausgefüllten Fläche ist,
**dadurch gekennzeichnet, dass**:
- der Teil ohne Vorsprünge auch einen kegelstumpfförmigen umlaufenden Abschnitt (31b) besitzt, der in Richtung der Spitzen der Vorsprünge (25) aufgeweitet ist und in den Basen der Vorsprünge (25) ausmündet,
- die voll ausgefüllte Fläche Durchbrüche (7) umgibt, die um die Mitte der voll ausgefüllten Fläche symmetrisch verteilt sind, wobei wenigstens einer der Durchbrüche (7) von einem anderen Vorsprung (15) gesäumt ist.

2. Basis nach Anspruch 1, wobei die Fläche des Teils der voll ausgefüllten Fläche ohne Vorsprünge (17, 31b) wenigstens gleich dem Zweifachen der von den Vorsprüngen (15, 25) eingenommenen Fläche der voll ausgefüllten Fläche ist.

3. Basis nach einem der vorhergehenden Ansprüche, wobei die Vorsprünge (15, 25) Rippen sind, das heißt Vorsprünge, die sich in Längsrichtung erstrecken.

4. Basis nach einem der vorhergehenden Ansprüche, wobei die voll ausgefüllte Fläche eine kreisförmige Kontur aufweist.

5. Basis nach einem der Ansprüche 3 und 4, wobei die Rippen (25) die voll ausgefüllte Fläche umlaufen.

6. Basis nach dem vorhergehenden Anspruch, wobei der umlaufende Abschnitt (31b), im Querschnitt, mit dem mittigen Abschnitt (17) einen Winkel von 14° bildet.

7. Verbinder für inneres oder äußeres Zubehörteil für Tank, das eine Basis (1) nach einem der vorhergehenden Ansprüche und Mittel für die Verbindung mit einem Zubehörteil (35) aufweist.

8. Zubehörteil (35) für Tank, **dadurch gekennzeichnet, dass**:
- das Zubehörteil eine Basis nach einem der Ansprüche 1 bis 6 besitzt;
- die Basis des Zubehörteils eine Öffnung aufweist, die von der Fläche der Basis, als von den Vorsprüngen zurückgesetzte, voll ausgefüllte Fläche bezeichnet, umgeben ist.

9. Zubehörteil (35) nach dem vorhergehenden Anspruch, aufweisend eine Kammer, die beim Betrieb des Zubehörteils geschlossen sein muss und die von einem Boden und von einer Seitenwand, die in der Basis (1) ausmündet, begrenzt ist, wobei die Kammer dem Boden gegenüber offen ist, über eine Öffnung, die von der Fläche der Basis, als von den Vorsprüngen zurückgesetzte, voll ausgefüllte Fläche bezeichnet, umgeben ist.

10. Tank (33) für Kraftfahrzeug, umfassend wenigstens ein Zubehörteil (35) nach einem der Ansprüche 8 bis 9, deren Basis (1) an der Wand des Tanks verschweißt ist, wobei der Tank ferner eine Öffnung aufweist, die von der an der Wand des Tanks verschweißten Basis umgeben ist.

11. Verfahren zum Befestigen einer Basis (1) für ein inneres Zubehörteil (35) für Tank (33) für Kraftfahrzeug, nach einem der Ansprüche 1 bis 6, bestehend im:
- Montieren der Basis (1) auf einem Kern, der zwischen wenigstens zwei Formhöhlungen eines Formwerkzeugs zum Blasformen des Tanks platziert ist,
- Einlegen eines Vorformlings, der in ebenso viele Teile wie Formhöhlungen unterteilt ist und sich in einem geschmolzenen Zustand befindet, zwischen dem Kern und jeder Formhöhlung,
- Verschließen der Formhöhlungen auf den Kern,
- Einblasen eines Blasformgases zwischen dem Kern und jeder Formhöhlung, um jeden Teil des Vorformlings gegen die entsprechende Formhöhlung anzulegen,
- Anlegen der Basis (1) gegen den Vorformling, indem er gegen die entsprechende Formhöhlung gepresst wird, um einen Teil der Wärme des Vorformlings auf die Vorsprünge (15, 25) der Basis zu übertragen, um sie an dem Vorformling zu verschweißen,
- Öffnen der Formhöhlungen, um den Kern freizugeben,
- Entnehmen des Kerns,
- Verschließen der Formhöhlungen auf sich selbst,
- Verschweißen der Teile des Vorformlings miteinander, um einen Tankrumpf zu bilden,
- Öffnen der Formhöhlungen,
- Entformen des Tankrumpfs.

12. Verfahren zum Befestigen einer Basis für ein äußeres Zubehörteil für Tank für Kraftfahrzeug, nach einem der Ansprüche 1 bis 6, bestehend im:
- Montieren der Basis auf einer Formhöhlung eines Formwerkzeugs zum Blasformen des Tanks, das einen Kern umfasst, der zwischen wenigstens zwei Formhöhlungen platziert ist,
- Einlegen eines Vorformlings, der in ebenso viele Teile wie Formhöhlungen unterteilt ist und sich in einem geschmolzenen Zustand befindet, zwischen dem Kern und jeder Formhöhlung,
- Verschließen der Formhöhlungen auf den Kern,
- Einblasen eines Blasformgases zwischen dem Kern und jeder Formhöhlung, um jeden Teil des Vorformlings gegen die entsprechende Formhöhlung anzulegen,
- Anlegen der Basis gegen den Vorformling, indem er gegen eine Auflage gepresst wird, die zu diesem Zweck auf dem Kern vorgesehen ist, um einen Teil der Wärme des Vorformlings auf die Vorsprünge der Basis zu übertragen, um sie an dem Vorformling zu verschweißen,
- Öffnen der Formhöhlungen, um den Kern freizugeben,
- Entnehmen des Kerns,
- Verschließen der Formhöhlungen auf sich selbst,
- Verschweißen der Teile des Vorformlings miteinander, um einen Tankrumpf zu bilden,
- Öffnen der Formhöhlungen,
- Entformen des Tankrumpfs.

## Claims

1. A base (1) made of plastic material for a tank (33) accessory (35) for a motor vehicle, comprising protrusions (15, 25) which are designed to be welded on a pre-form during the production of the tank by blow molding of this pre-form,
- the base comprising a solid surface recessed from the protrusions, this solid surface having a part (17, 31b) which is without protrusions and a part which is occupied by the protrusions, the part which is without protrusions having a circular flat central portion (17),
- the area of the part of the solid surface which is without protrusions (17, 31b) is at least equal to one times the area of the solid surface which is occupied by the protrusions (15, 25),
**characterized in that**:
- the part which is without protrusions also has a peripheral portion (31b) which is frusto-conical and raises in the direction of the tops of protrusions (25), ending at bases of the protrusions (25),
- the solid surface surrounds openings (7) distributed symmetrically around the center of the solid surface, at least one of the openings (7) being bordered by another protrusion (15).

2. The base as claimed in claim 1, wherein the area of the part of the solid surface which is without protrusions (17, 31b) is at least equal to twice the area of the solid surface which is occupied by the protrusions (15, 25).

3. The base as claimed in any one of the preceding claims, wherein the protrusions (15, 25) are ribs, i.e. protrusions which extend longitudinally.

4. The base as claimed in any one of the preceding claims, wherein the solid surface has a circular contour.

5. The base as claimed in any one of claims 3 and 4, wherein the ribs (25) are peripheral on the solid surface.

6. The base as claimed in the preceding claim, wherein the peripheral portion (31b) forms, in transverse cross section, an angle of 14° with the central portion (17).

7. A connector for an internal or external accessory of a tank with a base (1) as claimed in any one of the preceding claims, and means for connection to an accessory (35).

8. An accessory (35) for a tank, **characterized by** the fact that:
- the accessory comprises a base as claimed in any one of the claims 1 to 6;
- the base of the accessory has an opening which is surrounded by the surface of the base called solid surface withdrawal of the protrusions.

9. An accessory (35) as claimed in the preceding claim, comprising a chamber which must be closed during functioning of the accessory, which chamber is delimited by a bottom and by a lateral wall which ends at the base (1), said chamber being open opposite the bottom by means of an aperture which is surrounded by the surface of the base designated as the solid surface which is recessed from the protrusions.

10. A tank for a motor vehicle, comprising at least one accessory as claimed in either of claims 8 or 9, the base (1) of which is welded on said wall of the tank, the tank further having an opening surrounded by the base welded to said wall of the tank.

11. A method for securing a base (1) for an internal accessory (35) of a tank (33) for a motor vehicle, as claimed in any one of claims 1 to 6, consisting of:
- fitting the base (1) on a core which is placed between at least two indentations of a mold for blow molding of the tank;
- interposing a pre-form which is divided into as many parts as there are indentations, and is in a molten state, between the core and each indentation;
- closing the indentations on the core;
- injecting a blow-molding gas between the core and each indentation, in order to apply each part of the pre-form against the corresponding indentation;
- applying the base (1) against the pre-form by pressing it against the corresponding indentation, so as to transfer part of the heat of the pre-form to the protrusions (15, 25) of the base, so as to weld them on the pre-form;
- opening the indentations so as to release the core;
- removing the core;
- closing the indentations on themselves;
- welding the parts of the pre-form together in order to constitute a tank body;
- opening the indentations;
- removing the tank body from the mold.

12. A method for securing a base for an external accessory of a tank for a motor vehicle, as claimed in any one of claims 1 to 6, consisting of:
- fitting the base on an indentation of a mold for blow molding of the tank, comprising a core which is placed between at least two indentations;
- interposing a pre-form which is divided into as many parts as there are indentations, and is in a molten state, between the core and each indentation;
- closing the indentations on the core;
- injecting a blow-molding gas between the core and each indentation, in order to apply each part of the pre-form against the corresponding indentation;
- applying the base against the pre-form by pressing it against a support which is provided for this purpose on the core, so as to transfer part of the heat of the pre-form to the protrusions of the base, so as to weld them on the pre-form;
- opening the indentations so as to release the core;
- removing the core;
- closing the indentations on themselves;
- welding the parts of the pre-form together in order to constitute a tank body;
- opening the indentations;
- removing the tank body from the mold.
